# EUROPÄISCHE PATENTSCHRIFT

(11) **EP 0 724 319 B1**
(45) Veröffentlichungstag und Bekanntmachung des Hinweises auf die Patenterteilung: **03.07.2002**
(21) Anmeldenummer: 96250017.9
(22) Anmeldetag: 24.01.1996
(51) Int. Cl.: H02J 3/24, H02H 3/40

(54) **Verfahren zum Gewinnen eines eine Pendelung in einem elektrischen Energieversorgungsnetz anzeigenden Signals**
Method for providing a signal indicating an oscillation in an electrical distribution network
Méthode d'obtention d'un signal indiquant une oscillation dans un réseau de distribution électrique

(30) Priorität: 26.01.1995 DE 19503626
(43) Veröffentlichungstag der Anmeldung: 31.07.1996
(73) Patentinhaber: SIEMENS AKTIENGESELLSCHAFT, 80333 München (DE)
(72) Erfinder: Böhme, Klaus, Dr., D-12242 Berlin (DE); Herrmann, Hans-Joachim, Dr., D-91459 Markt Erlbach (DE)

(56) Entgegenhaltungen:
- EP-A- 0 319 151
- DE-A- 4 100 646
- US-A- 2 845 581
- US-A- 4 426 670
- "7SA511 Digitaler Abzweigschutz" 1992 , SIEMENS DRUCKSCHRIFT XP002038894 * Seite 52 - Seite 53 *
- IPEC INTERNATIONAL POWER ENGINEERING CONFERENCE, 18.März 1993, Seiten 633-637, XP000671017 MOORE P J ET AL: "A NEW METHOD OF POWER SWING BLOCKING FOR DIGITAL DISTANCE PROTECTION"

## Beschreibung

Nach dem Auftreten von Lastsprüngen, Kurzschlüssen, Kurzunterbrechungen oder Schalthandlungen im Netz müssen sich die das Netz speisenden Generatoren auf die neue Leistungsbilanz einstellen. Dabei laufen Ausgleichsvorgänge ab, die sich in Form von sog. Pendelungen äußern. Diese sind charakterisiert durch hohe Ausgleichsströme und - besonders in der elektrischen Mitte eines Netzes - durch kleine Spannungen. Kleine Spannungen und große Ströme bedeuten eine kleine Impedanz, die bei das Netz überwachenden Impedanzschutzanordnungen unter Umständen zur sofortigen Auslösung führen können. Sofortige Auslösungen der Impedanzschutzanordnungen sind aber bei Pendelungen meist nicht notwendig und daher unerwünscht, so daß man Vorkehrungen trifft, um eine sofortige Auslösung einer Impedanzschutzanordnung bei vorliegender Pendelung zu blockieren.

Voraussetzung zum Blockieren einer Impedanzschutzanordnung bei Pendelung ist, daß ein Signal erzeugt wird, das eine Pendelung im jeweils zu überwachenden Netz anzeigt. Ein bekanntes Verfahren dieser Art ist in der Siemens-Druckschrift "7SA511 V2 Digitaler Abzweigschutz", 1992, Seiten 52 und 53 (Bestell-Nr. C 73000-G1100-C85-3)beschrieben. Bei diesem bekannten Verfahren wird auf eine Anregung hin die Bildung der Impedanzwerte in derart kurzen Zeitabständen vorgenommen, daß bei einer Pendelung mehrere Impedanzwerte in den Bereich zwischen dem Pendel und dem Auslösepolygon fallen. Bei einer unter einem vorgegebenen Grenzwert liegenden zeitlichen Änderung der Größe der Impedanzwerte wird ein eine Pendelung im elektrischen Energieversorgungsnetz anzeigendes Signal (Pendelsignal) erzeugt. Ist der vorgegebene Grenzwert überschritten, dann liegt keine Pendelung vor, sondern ein tatsächlicher Fehler im zu überwachenden Netz.

Der Erfindung liegt die Aufgabe zugrunde, ein Verfahren zum Gewinnen eines eine Pendelung in einem elektrischen Energieversorgungsnetz anzeigenden Signals vorzuschlagen, mit dem sich stets schnell und zuverlässig und ohne unerwünschte Verzögerung der Auslösung einer zugeordneten Impedanzschutzanordnung ein Pendelsignal erzeugen läßt.

Zur Lösung dieser Aufgabe wird ausgehend von dem oben beschriebenen, bekannten Verfahren erfindungsgemäß die Bildung der Impedanzwerte in derart kurzen Zeitabständen vorgenommen, daß bei einer Pendelung mehrere Impedanzwerte in den Bereich zwischen dem Pendel- und dem Auslösepolygon fallen; aus dem ersten in das Pendelpolygon fallenden Impedanzwert und aus dem vorangehenden Impedanzwert wird die zeitliche Änderung der Größe der Impedanzwerte bestimmt und bei einer unter dem vorgegebenen Grenzwert liegenden Wert der zeitlichen Änderung der Größe der Impedanzwerte ein internes Pendelverdachtsignal erzeugt; beim Vorliegen weiterer in das Pendelpolygon fallender Impedanzwerte wird das interne Pendelverdachtsignal ständig überprüft, und es wird bei dem ersten in das Auslösepolygon fallenden Impedanzwert das Pendelsignal erzeugt, wenn das interne Pendelverdachtsignal noch ansteht.

Ein wesentlicher Vorteil des erfindungsgemäßen Verfahrens wird darin gesehen, daß die zeitliche Änderung der Größe der Impedanzwerte in relativ kurzen, konstanten Zeitabständen erfolgt, so daß das erfindungsgemäße Verfahren in seiner Arbeitsweise unabhängig davon ist, in welcher Weise bzw. auf welcher Ortskurve die jeweils ermittelten Impedanzwerte im Bereich zwischen dem Pendelpolygon und dem Auslösepolygon aufeinanderfolgen. Ein weiterer Vorteil des erfindungsgemäßen Verfahrens besteht darin, daß bei ihm ein internes Pendelverdachtsignal erzeugt wird, das beim Vorliegen weiterer in das Pendelpolygon fallenden Impedanzwerte ständig überprüft wird, so daß bereits aufgrund eines ersten in das Auslösepolygon fallenden Impedanzwertes entschieden werden kann, ob eine Pendelung vorliegt oder ein Kurzschluß aufgetreten ist. Die Bildung des internen Pendelverdachtsignals bringt zusätzlich den Vorteil mit sich, daß bei einem mit seinem Impedanzwert zunächst in den Bereich zwischen Pendelpolygon und Auslösepolygon fallenden Kurzschluß, dessen Ortskurve der Impedanzwerte anschließend durch das Auslösepolygon verläuft, bereits beim ersten Impedanzwert innerhalb des Auslösepolygons die Auslösung veranlaßt werden kann, weil infolge der Überprüfung des Pendelverdachtssignals dieses bereits gelöscht worden ist.

Bei dem erfindungsgemäßen Verfahren wird es als vorteilhaft angesehen, wenn nach der Bildung eines Pendelsignals mittels weiterer jeweils aufeinander folgender und in das Auslösepolygon fallender Impedanzwerte überprüft wird, ob die zeitliche Änderung der Größe der Impedanzwerte unterhalb des vorgegebenen Grenzwertes liegt; bei einem Überschreiten des vorgegebenen Grenzwertes wird das Pendelsignal gelöscht. Der besondere Vorteil dieser Ausgestaltung des erfindungsgemäßen Verfahrens besteht darin, daß das Pendelsignal sofort gelöscht werden kann, wenn die zeitliche Änderung der Größe der Impedanzwerte den vorgegebenen Grenzwert überschritten hat, also ein Kurzschluß aufgetreten ist. Eine nennenswerte Verzögerung der Auslösung einer zugeordneten Impedanzschutzanordnung durch das erfindungsgemäße Verfahren ergibt sich daher nicht.

Die Überprüfung des internen Pendelverdachtsignals wird bei dem erfindungsgemäßen Verfahren vorteilhafterweise mittels jeweils aufeinander folgender und in das Pendelpolygon fallender Impedanzwerte in der Weise vorgenommen, daß die zeitliche Änderung der Größe jeweils aufeinanderfolgender Impedanzwerte ermittelt wird und bei einer oberhalb des Grenzwertes liegenden zeitlichen Änderung der Größe dieser Impedanzwerte das Pendelverdachtsignal gelöscht wird.

Es ist darauf hinzuweisen, daß das erfindungsgemäße Verfahren in allen seinen Ausgestaltungen nicht nur bei Auslösecharakteristiken in Form von Polygonen anwendbar ist, sondern auch bei anderen Auslösecharakteristiken, wie z.B. linsenförmigen; entsprechend ist dann die Pendelcharakteristik ausgebildet.

Zur weiteren Erläuterung des erfindungsgemäßen Verfahrens ist in
- Figur 1: eine Darstellung mit einem von einem Pendelpolygon umgebenden Auslösepolygon und in
- Figur 2: ein Logikdiagramm des erfindungsgemäßen Verfahrens wiedergegeben.

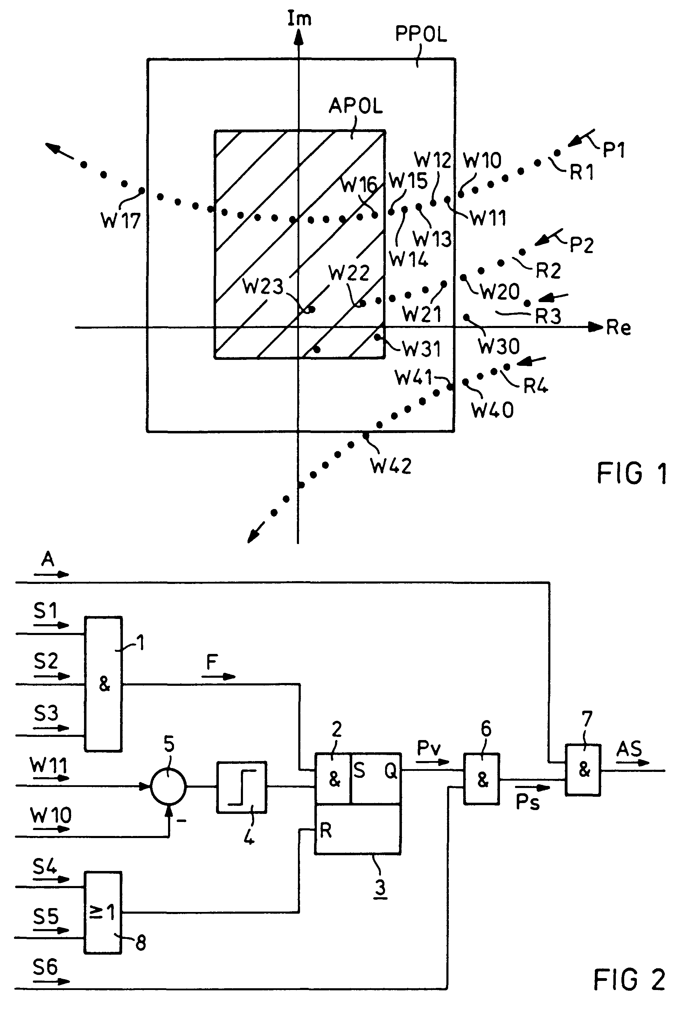

In Figur 1 ist in der üblichen Darstellung in der Widerstandsebene mit auf der Abzisse aufgetragenem Realanteil Re und auf der Ordinate aufgetragenem Imaginärteil Im von Impedanzen ein Auslösepolygon AP0L wiedergegeben, das dem Auslösepolygon eines in der Regel zusammen mit dem erfindungsgemäßen Verfahren durchgeführten Verfahren zur Fehlererfassung mittels Impedanzmessung entspricht. Dieses Auslösepolygon APOL ist von einem Pendelpolygon PPOL umgeben, wobei beispielsweise der Unterschied zwischen den beiden Polygonen jeweils 2 Ω betragen kann.

In der Figur 1 ist ferner eine Ortskurve bzw. eine Reihe R1 von Impedanzwerten aufgetragen, die aus abgetasteten Strom- und Spannungswerten eines nicht dargestellten, zu überwachenden Netzes gebildet sind. Im Falle einer Pendelung ergeben sich nacheinander in Richtung des Pfeiles P1 aufeinanderfolgende Meßwerte, unter denen auch ein erster in das Pendelpolygon PPOL fallende Impedanzwert W11 ist. Tritt dieser Impedanzwert W11 auf, dann wird bei dem erfindungsgemäßen Verfahren überprüft, wie sich die Größe dieses Impedanzwertes in bezug auf einen vorangegangenen Impedanzwert W10 verhält. Da alle Impedanzwerte und damit auch die Impedanzwerte W11 und W10 in einem konstanten zeitlichen Abstand Δt nacheinander ermittelt werden, läßt sich die zeitliche Änderung der Größe der Impedanzwerte einfach und schnell bestimmen. Die so ermittelte zeitliche Änderung der Größe der Impedanzwerte W10 und W11 wird mit einem vorgegebenen Grenzwert verglichen. Wird dieser Grenzwert nicht überschritten, dann wird dies als Anzeichen dafür genommen, daß eine Pendelung vorliegen könnte, und es wird ein Pendelverdachtsignal Pv (vergleiche auch Figur 2) erzeugt.

Auch bezüglich der nachfolgenden Impedanzwerte W12, W13, W14 und W15 der Reihe R1 wird jeweils eine Ermittlung der zeitlichen Änderung der Größe der Impedanzwerte zum jeweils vorangehenden Impedanzwert vorgenommen. Ergibt sich, daß die zeitliche Änderung der Größe der Impedanzwerte bei jedem Vergleich unterhalb des vorgegebenen Grenzwertes bleibt, dann wird das Pendelverdachtsignal Pv aufrecht erhalten. Ergibt sich schließlich ein erster in das Auslösepolygon APOL fallender Impedanzwert W16, dann wird dieser Impedanzwert nicht zur Auslösung der zugeordneten Impedanzschutzanordnung zugelassen, weil wegen des nach wie vor bestehenden Pendelverdachtsignals Pv von einer Pendelung und nicht von einem Kurzschluß auszugehen ist. Es erfolgt also keine Auslösung einer nicht dargestellten, zugeordneten Impedanzschutzanordnung, weil diese durch das auf den Impedanzwert W16 erzeugte Pendelsignal Ps (siehe auch Figur 2) gesperrt ist.

Das Pendelsignal Ps und damit die Blockierung der zugeordneten Impedanzschutzanordnung wird auch während der nachfolgenden, in das Auslösepolygon APOL fallenden Impedanzwerte aufrecht erhalten, weil die jeweils erfolgende Ermittlung der zeitlichen Änderung der Größe aufeinanderfolgender Impedanzwerte jedesmal ergibt, daß der vorgegebene Grenzwert nicht überschritten wird.

Bei dem ersten wieder außerhalb des Pendelpolygons PPOL liegenden Impedanzwert W17 wird schließlich das Pendelsignal Ps und auch das Pendelverdachtsignal Pv gelöscht.

Ergibt sich bei einer anderen Pendelung in Richtung eines Pfeiles P2 eine Reihe R2 von aufeinanderfolgenden Impedanzwerten, dann wird wiederum bei einem ersten in das Pendelpolygon PPOL fallenden Impedanzwert W21 ein Pendelverdachtsignal Pv erzeugt, sofern die zeitliche Änderung der Größe der Impedanzwerte bezüglich des vorangehenden Impedanzwertes W20 unterhalb des vorgegebenen Grenzwertes geblieben ist. Auch bezüglich der folgenden Impedanzwerte der Reihe R2 ergeben sich dieselben Verhältnisse, wie sie oben im Zusammenhang mit den Impedanzwerten der Reihe R1 dargestellt und erläutert worden sind. Eine Abweichung im Verhalten beim Praktizieren des erfindungsgemäßen Verfahrens ergibt sich bei der Reihe R2 der Impedanzwerte allerdings dann, wenn auf einen Impedanzwert W22 innerhalb des Auslösepolygons APOL ein Impedanzwert W23 in dargestellter Weise folgt. In diesem Falle wird nämlich eine zu große zeitliche Änderung der Größe der Impedanzwerte W22 und W23 festgestellt, woraufhin das Pendelsignal Ps gelöscht wird. Damit wird die Blockierung der zugeordneten Impedanzschutzanordnung aufgehoben, und diese kann ansprechen.

Folgt gemäß einer Reihe R3 von Impedanzwerten auf einen letzten außerhalb des Pendelpolygons PPOL liegenden Impedanzwert W30 unmittelbar ein innerhalb des Auslösepolygons APOL liegender nächster Impedanzwert W31, dann wird im Rahmen des erfindungsgemäßen Verfahrens ein Pendelverdachtsignal Pv nicht erzeugt, weil im Bereich zwischen der Begrenzungslinie des Pendelpolygons PPOL und der des Auslösepolygons APOL kein Impedanzwert festgestellt worden ist. Es wird dann auch kein Pendelsignal aufgrund des Impedanzwertes W31 erzeugt, sondern es erfolgt sofort eine Auslösung der zugeordneten Impedanzschutzanordnung.

Schließlich sei noch anhand einer weiteren möglichen Reihe R4 von Impedanzwerten im Falle einer Pendelung darauf hingewiesen, daß auch hier bei einem auf einen letzten außerhalb des Pendelpolygons PPOL liegenden Impedanzwert W40 folgenden ersten innerhalb des Pendelpolygons PPOL liegenden Impedanzwert W41 wiederum das Pendelverdachtsignal Pv erzeugt wird. Da die auf den Impedanzwert W41 folgenden weiteren Impedanzwerte alle außerhalb des Auslösepolygons APOL auftreten, wird auf einen Impedanzwert W42 hin das Pendelverdachtsignal Pv wieder gelöscht.

Figur 2 läßt erkennen, daß ein Freigabesignal F für die Durchführung des erfindungsgemäßen Verfahrens nur dann abgegeben wird, wenn an einem vorgeordneten UND-Glied 1 mehrere Signale S1, S2 und S3 gleichzeitig anstehen. Das Signal S1 tritt auf, wenn - im Falle eines zu überwachenden mehrphasigen Netzes - ein Strom der Gegenkomponente kleiner als beispielsweise 10 % des Nennstromes ist. Das Signal S2 liegt dann an, wenn bei dem mehrphasigen, zu überwachenden Netz bezüglich aller Phasen ein Anregesignal gegeben worden ist. Pendelungen sind nämlich mehrphasige symmetrische Vorgänge, so daß nur beim Fehlen eines Erdfehlers und gegebener Symmetrie der gemessenen Impedanzen Pendelungen erfaßbar sind. Das Signal S3 wird erzeugt, wenn das erfindungsgemäße Verfahren durchgeführt werden soll (Einschaltsignal).

Das Freigabe-Signal F ist auf einen Eingang eines weiteren UND-Gliedes 2 geführt, das in dem dargestellten Logik-Diagramm Bestandteil einer rücksetzbaren Kippstufe 3 ist. An einem weiteren Eingang des UND-Gliedes 2 ist über eine Grenzwertstufe 4 ein Differenzbildner 5 angeschlossen, der an einem Eingang beispielsweise mit einem Impedanzwert W10 und an einem weiteren Eingang mit einem Impedanzwert W11 gemäß Figur 1 beaufschlagt ist. In der Grenzwertstufe 4 wird überprüft, ob die Änderung in der Größe der Impedanzwerte zwischen W10 und W11 in der Zeit Δt unterhalb eines vorgegebenen Grenzwertes liegt; ist dies der Fall, dann wird das UND-Glied 2 entsprechend beaufschlagt und erzeugt an seinem Ausgang das Pendelverdachtsignal Pv. Tritt aufgrund des Impedanzwertes W16 (vergleiche Figur 1) ein Signal S6 auf, dann wird ein zusätzliches UND-Glied 6 durchgeschaltet, weil das Pendelverdachtsignal Pv an einem anderen Eingang dieses UND-Gliedes 6 noch anstand. Am Ausgang des UND-Gliedes 6 ergibt sich dann das Pendelsignal Ps.

Dieses Pendelsignal Ps wird in einem konkreten Anwendungsfalle sinnvollerweise in einem nachgeordneten UND-Glied 7 mit einem Impedanzanregesignal A verknüpft. Treten am Eingang des UND-Gliedes 7 das Anregesignal A und das Pendelsignal Ps gleichzeitig auf, dann entsteht am Ausgang des UND-Gliedes 7 ein Ausgangssignal AS, das eine nicht dargestellte, zugeordnete Impedanzschutzanordnung blockiert.

Der Reset-Eingang R der Kippstufe 3 bleibt bei dem eben geschilderten Verfahrensablauf ohne Wirkung, da ein vorgeordnetes ODER-Glied 8 weder an einem ersten Eingang mit einem Signal S4 beaufschlagt war, das einen Impedanzwert außerhalb des Pendelpolygons PPOL anzeigt, noch an einem weiteren Eingang ein Signal S5 aufwies, das signalisieren soll, daß die zeitliche Änderung der Größe der Impedanzwerte den vorgegebenen Grenzwert überschritten hat.

Für den Fall von Impedanzwerten gemäß der Reihe R2 der Figur 1 ergibt sich im Hinblick auf das Logik-Diagramm nach Figur 2 eine Änderung insofern, als infolge der starken zeitlichen Änderung der Größe der Impedanzwerte vom Impedanzwert W22 zum Impedanzwert W23 ein Signal S5 am Eingang des ODER-Gliedes 8 auftritt, woraufhin von diesem die Kippstufe 3 zurückgestellt wird; daraufhin erlischt das Pendelverdachtsignal Pv und als Folge davon erlischt auch das Pendelsignal Ps. Es wird damit die Blockierung der zugeordneten Impedanzschutzanordnung aufgehoben, so daß diese auslösen kann.

Treten dagegen nacheinander Impedanzwerte gemäß der Reihe R3 nach Figur 1 auf, dann wird das Pendelverdachtsignal Pv nicht erzeugt, weil von der Grenzwertstufe 4 an das UND-Glied 2 der Kippstufe 3 ein Signal nicht abgegeben wird. Auf den Impedanzwert W31 hin wird dann zwar ein Signal S6 auf den Eingang des UND-Gliedes 6 gegeben, jedoch an dessen Ausgang ein Pendelsignal Ps nicht erzeugt, weil das Pendelverdachtsignal Pv nicht vorhanden ist. Es tritt kein Blockieren der zugeordneten Impedanzschutzanordnung ein, so daß diese in korrekter Weise arbeiten kann.

## Patentansprüche

1. Verfahren zum Gewinnen eines eine Pendelung in einem elektrischen Energieversorgungsnetz anzeigenden Signals (Pendelsignals), bei dem
- auf eine Anregung hin aus abgetasteten Strom- und Spannungswerten gebildete Impedanzwerte hinsichtlich ihrer Lage in einem Auslösepolygon und einem dieses umfassenden Pendelpolygon untersucht werden, bei dem
- die Bildung der Impedanzwerte in derart kurzen Zeitabständen vorgenommen wird, daß bei einer Pendelung mehrere Impedanzwerte in den Bereich zwischen dem Pendel- und dem Auslösepolygon fallen, und bei dem
- bei einer unter einem vorgegebenen Grenzwert liegenden zeitlichen Änderung der Größe der Impedanzwerte das Pendelsignal erzeugt wird,
**dadurch gekennzeichnet, daß**
- aus dem ersten in das Pendelpolygon (PPOL) fallenden Impedanzwert (W11) und aus dem vorangehenden Impedanzwert (W10) die zeitliche Änderung der Größe der Impedanzwerte (W11,W10)
bestimmt und bei einer unter dem vorgegebenen Grenzwert liegenden Wert der zeitlichen Änderung der Größe der Impedanzwerte (W11,W10) ein internes Pendelverdachtsignal (Pv) erzeugt wird ,
- beim Vorliegen weiterer in das Pendelpolygon (PPOL) fallender Impedanzwerte (W12 bis W15) das interne Pendelverdachtsignal (Pv) ständig überprüft wird und
- bei dem ersten in das Auslösepolygon (APOL) fallenden Impedanzwert (W16) das Pendelsignal (Ps) erzeugt wird, wenn das interne Pendelverdachtsignal (Pv) noch ansteht.

2. Verfahren nach Anspruch 1,
**dadurch gekennzeichnet, daß**
- nach der Bildung eines Pendelsignals (Ps) mittels weiterer jeweils aufeinander folgender und in das Auslösepolygon (APOL) fallender Impedanzwerte überprüft wird, ob die zeitliche Änderung der Größe der Impedanzwerte unterhalb des vorgegebenen Grenzwertes liegt und
- bei einem Überschreiten des vorgegebenen Grenzwertes das Pendelsignal (Ps) gelöscht wird.

3. Verfahren nach Anspruch 1 oder 2,
**dadurch gekennzeichnet, daß**
- die Überprüfung des internen Pendelverdachtsignals (Pv) mittels jeweils aufeinander folgender und in das Pendelpolygon (PPOL)fallender Impedanzwerte (W12 bis W15) in der Weise vorgenommen wird, daß die zeitliche Änderung der Größe jeweils aufeinanderfolgender Impedanzwerte (W12,W15) ermittelt wird und
- bei einer oberhalb des Grenzwertes liegenden zeitlichen Änderung der Größe dieser Impedanzwerte (W12 bis W15) das Pendelverdachtsignal (Pv) gelöscht wird.

## Claims

1. Method for obtaining a signal (oscillation signal) which indicates oscillation in an electrical power supply network, in which
- in response to a stimulus, impedance values formed from sampled current and voltage values are investigated in terms of their position in a tripping polygon and an oscillation polygon comprising the latter, in which
- the impedance values are formed at such short intervals of time that, for one oscillation, a plurality of impedance values appear in the region between the oscillation polygon and the tripping polygon, and in which
- the oscillation signal is produced if a change in the magnitude of the impedance values over time is below a prescribed limit value,
**characterized in that**
- the first impedance value (W11) appearing in the oscillation polygon (PPOL) and the previous impedance value (W10) are used to determine the change in the magnitude of the impedance values (W11,W10) over time, and an internal oscillation suspicion signal (Pv) is produced if a value for the change in the magnitude of the impedance values (W11,W10) over time is below the prescribed limit value,
- the internal oscillation suspicion signal (Pv) is continuously checked during the presence of further impedance values (W12 to W15) appearing in the oscillation polygon (PPOL), and
- the oscillation signal (Ps) is produced for the first impedance value (W16) appearing in the tripping polygon (APOL) if the internal oscillation suspicion signal (Pv) is still present.

2. Method according to Claim 1,
**characterized in that**
- after the formation of an oscillation signal (Ps), further impedance values, which respectively follow one another and appear in the tripping polygon (APOL), are used to check whether the change in the magnitude of the impedance values over time is below the prescribed limit value, and
- the oscillation signal (Ps) is cleared if the prescribed limit value is exceeded

3. Method according to Claim 1 or 2,
**characterized in that**
- the internal oscillation suspicion signal (Pv) is checked, using impedance values (W12 to W15) which respectively follow one another and appear in the oscillation polygon (PPOL), such that the change in the magnitude of respectively successive impedance values (W12,W15) over time is ascertained, and
- the oscillation suspicion signal (Pv) is cleared if a change in the magnitude of these impedance values (W12 to W15) over time is above the limit value.

## Revendications

1. Procédé d'obtention d'un signal indiquant une oscillation dans un réseau d'alimentation électrique (signal oscillant), dans lequel
- sur une excitation on étudie des valeurs d'impédance formées à partir de valeurs de courant et de tension détectées du point de vue de leur position dans un polygone de déclenchement et dans un polygone d'oscillation entourant celui-ci, dans lequel
- on effectue la formation des valeurs d'impédance dans de brefs laps de temps de façon qu'il se produise pour une oscillation plusieurs valeurs d'impédance dans le domaine compris entre le polygone d'oscillation et le polygone de déclenchement et dans lequel
- pour une variation dans le temps inférieure à une valeur limite prescrite de la grandeur des valeurs d'impédance, il est produit le signal oscillant,
**caractérisé en ce que**
- à partir de la première valeur (W11) d'impédance se produisant dans le polygone (PPOL) d'oscillation et de la valeur (W10) d'impédance précédente, on détermine la variation dans le temps de la grandeur de la valeur (W11, W10) d'impédance et, pour une valeur inférieure à la valeur limite prescrite de la variation dans le temps de la grandeur des valeurs (W11, W10) d'impédance, il est produit un signal (Pv) imaginaire oscillant interne,
- en présence d'autres valeurs (W11 à W15) d'impédance se trouvant dans le polygone (PPOL) d'oscillation, il est contrôlé en permanence le signal (Pv) imaginaire oscillant interne et
- pour la première valeur (W16) d'impédance se produisant dans le polygone (APOL) de déclenchement, il est produit le signal (Ps) oscillant si le signal (Pv) imaginaire oscillant interne est encore appliqué.

2. Procédé suivant la revendication 1,
**caractérisé en ce que**
- après la formation d'un signal (Ps) oscillant on contrôle au moyen d'autres valeurs d'impédance se succédant et se produisant dans le polygone (APOL) de déclenchement si la variation dans le temps de la grandeur des valeurs d'impédance est inférieure à la valeur limite prescrite et
- si la valeur limite prescrite est dépassé, le signal (Ps) oscillant est effacé.

3. Procédé suivant la revendication 1 ou 2,
**caractérisé en ce que**
- on effectue le contrôle du signal (Pv) imaginaire oscillant interne au moyen de valeurs (W12 à W15) d'impédance se succédant respectivement et se produisant dans le polygone (PPOL) d'oscillation de façon à déterminer la variation dans le temps de la grandeur de respectivement des valeurs (W12 à W15) d'impédance qui se succèdent et
- pour une variation dans le temps dépassant la valeur limite de la grandeur de ces valeurs (W12 à W15) d'impédance, le signal (Pv) imaginaire oscillant est effacé.
